# EUROPEAN PATENT SPECIFICATION

(11) **EP 0 668 253 B1**
(45) Date of publication and mention of the grant of the patent: **23.08.2000**
(21) Application number: 95101420.8
(22) Date of filing: 02.02.1995
(51) Int. Cl.: C04B 35/486, F16C 33/24, C22C 33/02, C22C 32/00, F16J 10/04

(54) **Low frictional composite material for sliding member**
Verbundkörper mit geringem Reibungskoeffizienten für Gleitteil
Matériau composite à faible frottement pour élément de glissement

(30) Priority: 03.02.1994 JP 3183994; 25.11.1994 JP 31547694; 28.11.1994 JP 31762194
(43) Date of publication of application: 23.08.1995
(60) Divisional application: 97100310.8
(73) Proprietor: ISUZU CERAMICS RESEARCH INSTITUTE CO., LTD., Fujisawa-shi Kanagawa 252 (JP)
(72) Inventor: Kita, Hideki, Kanagawa-ken, 251 (JP); Kawamura, Hideo, 8-13-5 Okada Samukawa-machi, Kanagawa-ken, 253-01 (JP); Unno, Yasuaki, Kanagawa-ken, 242 (JP)
(74) Representative: Niedmers, Ole, Dipl.-Phys.

(56) References cited:
- EP-A- 0 067 327
- EP-A- 0 481 763
- GB-A- 2 030 598
- NL-A- 7 807 747
- US-A- 4 690 910
- US-A- 5 087 181
- PATENT ABSTRACTS OF JAPAN vol. 017, no. 001 (C-1014) 5 January 1993 & JP-A-04 238 861 (NISSHIN FLOUR MILLING CO. LTD.) 26 August 1992
- DATABASE WPI Week 8851, Derwent Publications Ltd., London, GB; AN 88-364669 & JP-A-63 274 662 (HITACHI CHEMICAL KK) 11 November 1988

## Description

The present invention relates to a low frictional composite material used for a sliding member to be used together with a lubricating oil.

For a sliding member which is relatively slidably moved under a lubricant such as a cylinder and a piston of the engine, it is required that a wear resistance is excellent and a frictional coefficient or coefficient of friction during sliding is small. To make the frictional coefficient less, it is demanded that the sliding member has a good wettability for lubricating oil. For the frictional characteristic (to minimize a frictional loss) of the sliding member used together with the lubricating oil, it is effective to use a material having a good wettability for oil on the surface of the sliding member in a boundary lubricating area and in a mixed lubricating area but is not effective in a fluid lubricating area.

Such low frictional composite material is disclosed in Japanese Patent Laid-Open No. JP-A-63-139044 and Japanese Patent Laid-Open No. JP-A-04-238861. There is disclosed that a green body is formed from a mixture of a ceria stabilized zirconia powder and a lanthanum β-alumina powder. The green body is sintered at a temperature above 1600 °C, and a needle like grain of the lanthanum β-alumina is allowed to grow to thereby enhance the fracture toughness. In detail the composite material is heat treated within the range of 1450 to 1700°C for four hours to obtaine a sintered material. It contains 60 - 92 vol.% ceria stabilized zirconia, 5 - 30 vol.% α-alumina and 3 vol.% or more but 10 vol.% or less lanthanum-based β-alumina. However, the aforementioned low frictional composite material is excellent in the wear resistance but is not sufficient in the low friction property. Further, it is necessary to sinter green body of said material at a high temperature above 1600 °C in order to grow the needle like grain of the lanthanum β-alumina, leading to a difficulty of increasing time and cost.

The wear resistant material disclosed in Japanese Patent Laid-Open No. JP-A-62-127454 is a composite sintered substance comprising 5 to 25 wt% of oxide, 2 to 15 wt% of graphite, and the balance, iron, which cannot exhibit the wear resistance and the low frictional property in both lubricating areas as described above. In the aforementioned wear resistant material, said oxide is ceramics such as alumina, and therefore, the ceramics is reacted with a component of detergent contained in the lubricating oil to impede the formation of an oil film by the component of the detergent adhered to the surface of the wear-resistant material, thus increasing the frictional coefficient during sliding.

In view of the aforementioned problems, it is an object of the present invention to provide a low frictional composite material for a sliding member which is high in mechanical strength and fracture toughness, small in frictional coefficient, excellent in wear resistance, and which can be sintered at a relatively low temperature.

It is a further object of the present invention to provide a low frictional composite material for a sliding member, which is combined so as to exhibit a low frictional property and a wear resistance corresponding to a boundary lubricating area, a mixed lubricating area and a fluid lubricating area of the surface of the sliding member.

For achieving the above-described object, the construction of the present invention is as in claims.

The low frictional composite material for a sliding member using zirconia according to the present invention can be sintered at a lower temperature than that of a conventional composite sintered substance with ceria stabilized zirconia and lanthanum β-alumina, in which an iron oxide contained in the low frictional composite material enhances the adsorption property and wettability to reduce a frictional coefficient as the sliding member.

In the low frictional composite material for a sliding member according to the present invention, since an iron oxide of less than 17.5 wt% is contained in a matrix of iron, a component of detergent contained in a lubricating oil is hard to be adhered to the surface of the low frictional composite material. Accordingly, a stabilized oil film is formed on the surface of the low frictional composite material to make small the frictional coefficient as the sliding member.

The low frictional composite material for a sliding member according to the present invention is selected corresponding to a boundary lubricating area (including a mixed lubricating area) and a fluid lubricating area. That is, in the boundary and mixed lubricating areas of the sliding member, a material which is small in a contact angle with respect to a lubricating oil and has a good wettability is disposed, while in the fluid lubricating area of the sliding member, a material which is large in a contact angle with respect to a lubricating oil and has a poor wettability is disposed to thereby minimize the frictional coefficient with respect to the whole surface of the sliding member.
- Fig. 1: is a view of the structure of a conventional low frictional composite material.
- Fig. 2: is a view of the structure of a conventional low frictional composite material.
- Fig. 3: is a view of the structure of a low frictional composite material according to an embodiment of the present invention.
- Fig. 4: is a diagram showing a relationship between an addition amount of iron oxide and a frictional coefficient in connection with the low frictional composite material according to the first embodiment of the present invention.
- Fig. 5: is a diagram showing frictional characteristics of mutual low frictional composite materials according to the present invention.

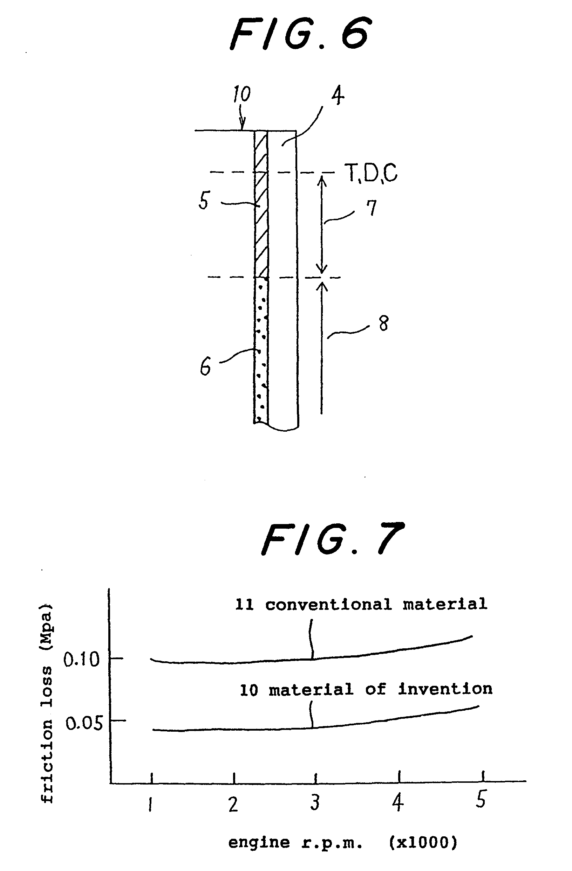

- Fig. 6: is a sectional view in front of a cylinder liner of the engine making use of frictional characteristics of mutual low frictional composite materials according to the present invention.
- Fig. 7: is a diagram showing a relationship between the number of revolutions of the engine and the frictional loss.

The present invention will be described hereinbelow in detail referring to Examples.

First, a low frictional composite material used for a sliding member according to Example 1 of the present invention is a sintered body which is prepared by adding 15 wt% of α-alumina (α-Al₂O₃) and 5 wt% of lanthanum β-alumina (La₂O₃β-Al₂O₃, now call this LBA) to ceria stabilized zirconia (CeO₂) to prepare a raw powder of LBA/CeO₂ stabilized ZrO₂ composite oxide, and adding 10 wt% of iron oxide to the raw powder of LBA/CeO₂ stabilized ZrO₂ composite oxide to prepare a green body (sample) by CIP (cold isostatic press), said green body being sintered at a temperature of from 1300 to 1600 °C.

As a Comparative Example, a sintered body was prepared by molding a green body by CIP from a material in which the iron oxide is not added (an addition amount of iron oxide is 0 wt%) to the raw powder of LBA/CeO₂ stabilized ZrO₂ composite oxide, said green body (sample) being sintered at a temperature of from 1300 to 1600 °C.

Table 1 shows the measured results of the porosity, the 4-point bending strength and the fracture toughness, with respect to the sintered body according to the present invention and the sintered body according to the Comparative Example. It is found from Table 1 that when the sintered body in which the iron oxide as added to the LBA/CeO₂ stabilized ZrO₂ composite oxide is compared with the sintered body without addition, the sintered body according to the present invention whose sintering-temperature is low is small in the porosity and high in the 4-point bending strength and the fracture toughness.

**Table 1**

| sintering temp. °C | content of oxide of Fe wt% | porosity % | bending strength Mpa | fracture toughness Mpa m^{1/2} |
|---|---|---|---|---|
| 1300 | 0 | 10.7 | 220 | 3.4 |
| 1300 | 10 | 1.2 | 480 | 8.4 |
| 1400 | 0 | 5.5 | 300 | 4.2 |
| 1400 | 10 | 1.0 | 530 | 9.5 |
| 1500 | 0 | 2.1 | 420 | 7.8 |
| 1500 | 10 | 0.8 | 500 | 9.1 |
| 1600 | 0 | 0.9 | 510 | 8.9 |
| 1600 | 10 | 3.8 | 310 | 4.4 |

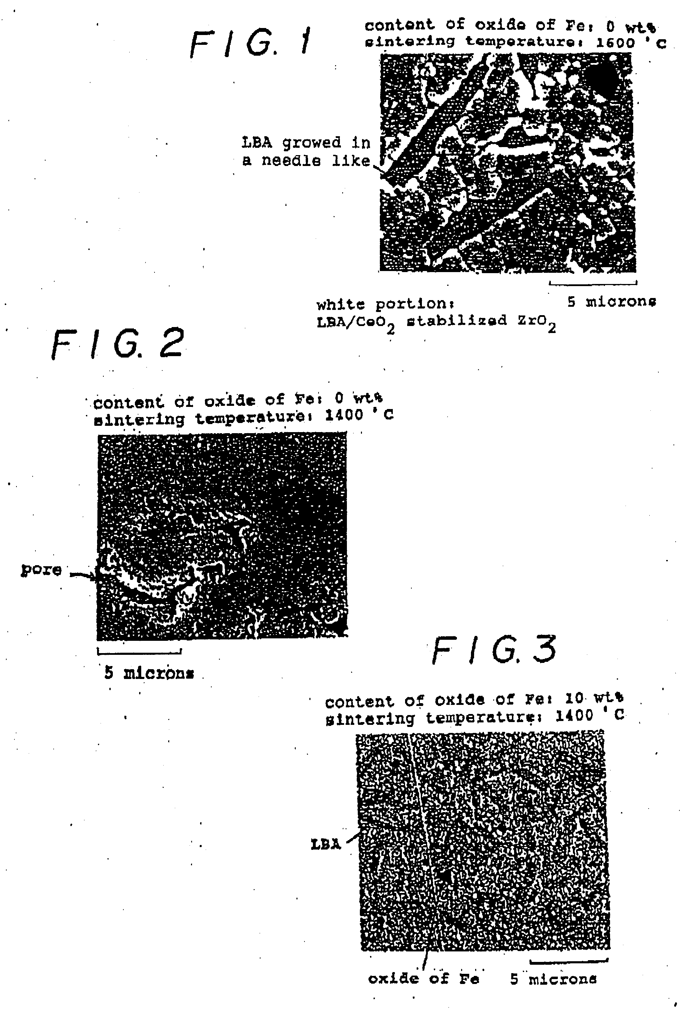

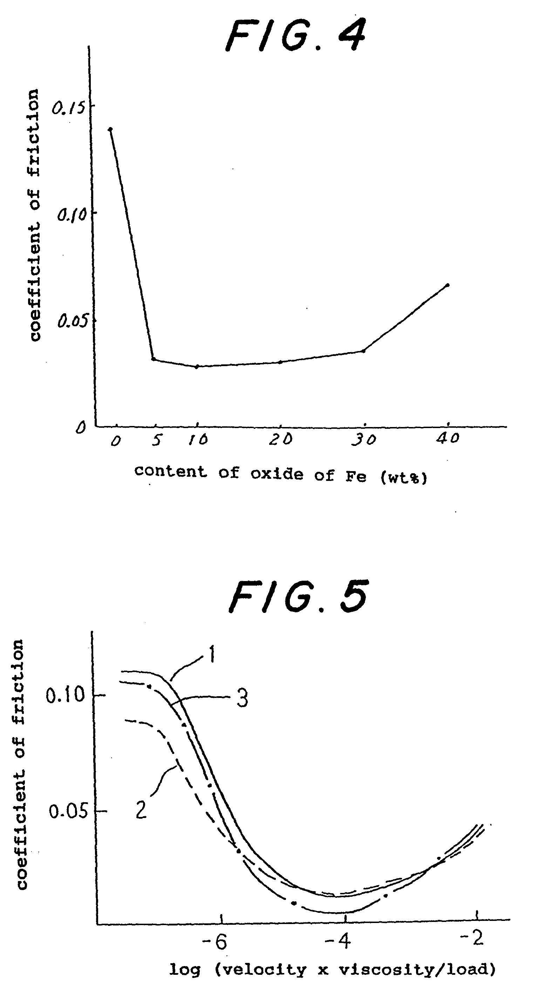

Fig. 1 shows the structure of the sintered body obtained by sintering the green body (an addition amount of iron oxide is 0 wt%) in which the iron oxide is not added to the LBA/CeO₂ stabilized ZrO₂ composite oxide at a temperature of 1600 °C. Fig. 2 shows the structure of the sintered body obtained by sintering the green body (the iron oxide is 0 wt%) in which the iron oxide is not added to the CeO₂ stabilized ZrO₂/LBA composite oxide at a temperature of 1400 °C. Fig. 3 shows the structure of the sintered body obtained by sintering the green body in which 10 wt% of the iron oxide is added to the LBA/CeO₂ stabilized ZrO₂ composite oxide according to the present invention at a temperature of 1400 °C.

In the sintering body shown in Fig. 1, LBA grows in a needle like and the LBA seems to enhance the mechanical properties. However, in the sintering body shown in Fig. 2, the sintering temperature is so low, 1400 °C, that LBA does not grow in needle like grains. Obviously, many pores are present.

On the other hand, in the sintered body according to the present invention, though the sintering temperature is 1400 °C, LBA grows in needle like grains the pores are also small. Accordingly, it is assumed in the sintered body according to the present invention that by the addition of the iron oxide, the sintering property of the LBA/CeO₂ stabilized ZrO₂ composite oxide was improved, and the porosity, the 4-point bending strength and the fracture toughness of the sintered body was improved.

Next, a low frictional composite material used for a sliding member according to Example 2 of the present invention is a sintered substance which is prepared by producing several kinds of green bodies (samples) by CIP from a material in which 0 - 40 wt% (except 0 wt%) of an iron oxide is added to a raw powder of LBA/CeO₂ stabilized ZrO₂ composite oxide used in Example 1, each of the green bodies being sintered at a temperature of about 1400 °C.

Table 2 shows the measured results of the porosity, the 4-point bending strength and the fracture toughness, with respect to the sintered bodies (samples) with the addition amount of

**Table 2**

| content of oxide of Fe wt% | porosity % | bending strength Mpa | fracture toughness Mpa m^{1/2} |
|---|---|---|---|
| 0 | 5.5 | 300 | 4.2 |
| 5 | 3.8 | 480 | 7.5 |
| 10 | 1.0 | 530 | 9.5 |
| 20 | 0.8 | 500 | 9.4 |
| 30 | 1.0 | 490 | 8.7 |
| 40 | 5.2 | 310 | 5.6 |

the iron oxide to the raw powder of LBA/CeO₂ stabilized ZrO₂ composite oxide changed. It is obvious from Table 2 that the sintered body with 5 to 30 wt% of iron oxide added thereto is excellent in terms of the porosity, the 4-point bending strength and the fracture toughness as compared with that with the iron oxide not added thereto.

A green body was prepared by adding a predetermined amount of iron oxide to the raw powder of LBA/CeO₂ stabilized ZrO₂ composite described above, said green body was sintered at a temperature of about 1400 °C to prepare several kinds of sintered bodies. A sliding testing plate having a size of 65 mm x 15 mm x 10 mm was processed from each of the sintered body. At this time, a 10-measurements average roughness Rz of the surface of 65 mm x 15 mm was finished to be less than 0.4 µm. On the other hand, as the other element with respect to the sliding testing plate, a sliding testing pin having a diameter of 8 mm, a length of 25 mm, a radius curvature of a hemispherical end surface of 18 mm was processed from a cast iron.

The sliding testing pin was vertically set up on the sliding testing plate. The sliding test for reciprocating of the testing pin on the surface of the sliding testing plate while being lubricated with a synthetic oil was conducted to measure a frictional coefficient. The sliding conditions used at this time are as follows: The sliding speed of the sliding testing pin is 0.262 m/sec; the load applied to the sliding testing pin is 1 kgf; and the temperature of the sliding portion is 150 °C.

Fig. 4 shows the measured results of the frictional coefficient of the sintered substance according to the present invention, from the aforementioned sliding test. It is apparent from Fig. 4 that the raw material of the sintered substance in which 5 to 30 wt% of iron oxide was added to the raw powder of the LBA/CeO₂ stabilized ZrO₂ composite oxide lowers in the fictional coefficient. It is considered that the lowering of the frictional coefficient of the sintered substance results from the fact that the wettability for a lubricating oil is enhanced by the iron oxide and a film of the lubricating oil is formed on the surface of the sliding testing plate.

It is assumed that in the case where the addition amount of the iron oxide with respect to the raw powder of the LBA/CeO₂ stabilized ZrO₂ composite oxide is set to 40 wt%, pores within the sintered body increase, and unevennesses are formed on the surface of the sintered body so that the frictional coefficient becomes large.

According to the present invention, since the raw material comprises CeO₂ stabilized ZrO₂, α-Al₂O₃, La₂O₃ β-Al₂O₃ and iron oxide, it is possible to obtain a low frictional composite material for a wear resistant sliding member, which can be sintered at a lower temperature than that of prior art, and which is low in porosity, high in mechanical strength and fracture toughness, and small in frictional coefficient.

The low frictional composite material for a sliding member contains an oxide of Fe of less than 17.5 wt% in matrix containing Fe. Therefore, a component of detergent contained in a lubricating oil is hard to adhere to the surface of material, a formation of an oil film on the material surface is not impeded, and a frictional coefficient during sliding can be minimized. Further, Fe being the matrix, it is possible to maintain a wear resistance and a low friction property for a long period of time against severe sliding-conditions.

According to the present invention, since a material suitable for the lubricating condition or lubrication area is disposed on the surface of the sliding member, the frictional coefficient can be made small over the whole surface of the sliding member. Particularly, in the case where a combination of the low frictional composite materials according to the present invention is used for the cylinder liner of the engine, and a material having a good wettability is used for the piston ring, it is possible to reduce the frictional loss to about one half of prior art over substantially whole running operating area of the engine to withstand the use for a long period of time.

## Claims

1. A low frictional composite material for a sliding member, comprising a sintered substance, which mainly includes a powder of ceria stabilized zirconia (CeO₂ stabilized ZrO₂), a powder of α-alumina (α-Al₂O₃) and a powder of lanthanum β-alumina (La₂O₃-β-Al₂O₃), characterized in that the substance further includes a powder of 5 to 30 wt% of iron oxide.

2. A low frictional composite material according claim 1, characterized in that the powders are mixed and molded to form a green body, said green body being sintered unter an atmosphere of a temperature in a range of 1300°C to 1500°C.

## Patentansprüche

1. Einen geringen Reibungskoeffizienten aufweisender Verbundwerkstoff für ein Gleitteil, umfassend eine gesinterte Substanz, die im wesentlichen ein Pulver aus ceriumoxidstabilisiertem Zirkoniumdioxid (CeO₂ stabilisiertem ZrO₂), ein Pulver aus α-Aluminiumoxid (α-Al₂O₃) und ein Pulver aus Lanthantrioxid β-Aluminiumoxid (La₂O₃-β-Al₂O₃) enthält, dadurch gekennzeichnet, daß die Substanz weiterhin ein Pulver mit 5 bis 30 Gewichts-% Eisenoxid enthält.

2. Einen geringen Reibungskoeffizienten aufweisender Verbundwerkstoff nach Anspruch 1, dadurch gekennzeichnet, daß die Pulver gemischt und geformt werden, um einen Formkörper zu bilden, wobei der Formkörper unter einer Atmosphäre bei einer Temperatur in einem Bereich von 1300 °C bis 1500 °C gesintert wird.

## Revendications

1. Matériau composite à faible frottement pour élément de glissement, comprenant une substance frittée, qui inclut principalement une poudre de zircone stabilisée par l'oxyde de cérium (ZrO₂ stabilisé par CeO₂), une poudre d'alumine α (α-Al₂O₃) et une poudre de lanthane et d'alumine β (La₂O₃ -β-Al₂O₃), caractérisé en ce que la substance inclut de plus de 5 à 30% en poids d'oxyde de fer en poudre.

2. Matériau composite à faible frottement selon la revendication 1, caractérisé en ce que les poudres sont mélangées et moulées pour former un corps cru, ledit corps cru étant fritté sous une atmosphère à une température dans une gamme de 1 300°C à 1 500°C.
